(19) Europäisches Patentamt / European Patent Office / Office européen des brevets

(11) **EP 4 782 183 A2**

(12) **EUROPEAN PATENT APPLICATION**

(43) Date of publication:
**29.07.2026 Bulletin 2026/31**

(21) Application number: **26184410.4**

(22) Date of filing: **11.06.2026**

(51) International Patent Classification (IPC):
*B29C 64/124* (2017.01)   *B29C 64/245* (2017.01)
*B29C 64/259* (2017.01)   *B29C 64/321* (2017.01)
*B29C 64/393* (2017.01)   *B33Y 10/00* (2015.01)
*B33Y 30/00* (2015.01)   *B33Y 40/00* (2020.01)
*B33Y 50/02* (2015.01)

(52) Cooperative Patent Classification (CPC):
B29C 64/124; B29C 64/245; B29C 64/259;
B29C 64/321; B29C 64/393; B33Y 10/00;
B33Y 30/00; B33Y 40/00; B33Y 50/02

(84) Designated Contracting States:
**AL AT BE BG CH CY CZ DE DK EE ES FI FR GB
GR HR HU IE IS IT LI LT LU LV MC MD ME MK MT
NL NO PL PT RO RS SE SI SK SM TR**
Designated Extension States:
**BA**
Designated Validation States:
**GE KH LA MA TN**

(30) Priority: **31.07.2025 CN 202511073917
31.12.2025 CN 202512060939**

(71) Applicant: **Shining 3D Tech Co., Ltd.
Hangzhou, Zhejiang 311258 (CN)**

(72) Inventors:
• **Taalab, Elias**
**Hangzhou, 311258 (CN)**
• **Wu, Binhui**
**Hangzhou, 311258 (CN)**
• **Meng, Cheng**
**Hangzhou, 311258 (CN)**
• **Chen, Da**
**Hangzhou, 311258 (CN)**
• **Zhao, Xiaobo**
**Hangzhou, 311258 (CN)**

(74) Representative: **Metida
Gyneju str. 16
01109 Vilnius (LT)**

(54) **PRINTING METHOD AND 3D PRINTER**

(57) A printing method is provided. The method is applied to a forming module (**200**). The forming module (**200**) defines a receiving cavity (**201**), and includes a light-transmissive assembly (**2011**) and a forming platform (**202**). The method includes controlling an air pump (**100**) to inject gas into the receiving cavity (**201**) based on an air pressure control algorithm until an air pressure in the receiving cavity (**201**) is higher than an ambient air pressure. A pressure difference is obtained based on the air pressure in the receiving cavity (**201**) and the ambient air pressure, a driving force for moving the forming platform (**202**) away from the light-transmissive assembly (**2011**) is determined based on the pressure difference, and the forming platform (**202**) is controlled to move away from the light-transmissive assembly (**2011**) based on the driving force. A 3D printer is also provided.

Release the forming platform from the light-transmissive assembly by controlling the forming platform to move away from the light-transmissive assembly, and make the air pressure in the receiving cavity become higher than an ambient air pressure to facilitate the release process — S101

After the release process is completed, control the forming platform to move to a next printing position for photocuring, so as to form a printed layer attached to the forming platform — S102

**FIG. 3**

## Description

FIELD

The present application relates to a field of three-dimensional (3D) printing, and in particular, to a printing method and a 3D printer.

BACKGROUND

In traditional photocuring 3D printing processes, a release process mainly relies on a mechanical method to overcome adhesion between a cured layer and a printing material. This direct mechanical release method not only makes the release process difficult, but also easily causes deformation or damage to a printed layer during peeling, thereby affecting forming accuracy and success rate.

BRIEF DESCRIPTION OF THE DRAWINGS

The accompanying drawings herein are incorporated into and constitute a part of the specification, illustrate embodiments consistent with the present application, and together with the description serve to explain principles of the present application.

FIG. 1 is a schematic diagram of a forming module before printing provided by an embodiment according to the present application.
FIG. 2 is a cross-sectional view of the forming module of FIG. 1, after printing.
FIG. 3 is a first schematic flowchart of a printing method provided by an embodiment according to the present application.
FIG. 4 is a second schematic flowchart of a printing method provided by another embodiment according to the present application.
FIG. 5 is a top view of a Z-axis cantilever in FIG. 1.
FIG. 6 is a schematic diagram of a gas path of a 3D printer provided by an embodiment according to the present application.
FIG. 7 is a third schematic flowchart of a printing method provided by another embodiment according to the present application.
FIG. 8 is a fourth schematic flowchart of a printing method provided by another embodiment according to the present application.
FIG. 9 is a first structural schematic diagram of a printing device provided by an embodiment according to the present application.
FIG. 10 is a second structural schematic diagram of a printing device provided by another embodiment according to the present application.
FIG. 11 is a structural schematic diagram of a 3D printer provided by an embodiment according to the present application.

The above-mentioned drawings illustrate clear embodiments of the present application, which will be described in more detail hereinafter. These drawings and textual descriptions are not intended to limit the scope of the inventive concept in any way, but rather to illustrate the concept of the present application to those skilled in the art by reference to specific embodiments.

DETAILED DESCRIPTION

Exemplary embodiments will be described in detail herein, with examples thereof illustrated in the accompanying drawings. When the following description refers to the accompanying drawings, the same numbers in different drawings represent the same or similar elements unless otherwise indicated. The implementations described in the following exemplary embodiments do not represent all implementations consistent with the present application. Rather, they are merely examples of devices and methods consistent with some aspects of the present application as detailed in the appended claims.

In traditional photocuring 3D printing processes, a release process mainly relies on a mechanical method to overcome adhesion between a cured layer and a printing material. This direct mechanical release method not only makes the release process difficult, but also easily causes deformation or damage to a printed layer during peeling, thereby affecting forming accuracy and success rate.

To address the above issues in the prior art, the present application provides a printing method and a 3D printer. The inventive concept of the printing method is: controlling a forming platform to move away from light-transmissive assembly while maintaining the air pressure inside the receiving cavity above the ambient pressure. This concept may be applied to both printing and stirring.

Printing procedure: A pressure difference is formed between an internal of the receiving cavity and an external of the receiving cavity as air pressure in a receiving cavity increases. A driving force is generated on a forming platform to move it away from a light-transmissive assembly, causing the forming platform to be moved away from the light-transmissive assembly for release. The increased air pressure in the receiving cavity acts on printing material, a current printed layer, and the light-transmissive assembly, improving release capability between the current printed layer and the light-transmissive assembly, achieving a smoother, faster, and less damaging release.

Stirring procedure: The pressure difference is formed between the internal of the receiving cavity and the external of the receiving cavity as the air pressure in the receiving cavity increases. The driving force is generated on the forming platform to move it away from the light-transmissive assembly, causing the forming platform to be moved away from the light-transmissive assembly for stirring, so that the printing material is uniform. The increased air pressure in the receiving cavity causes the printing material to flow faster, resulting in higher stirring efficiency.

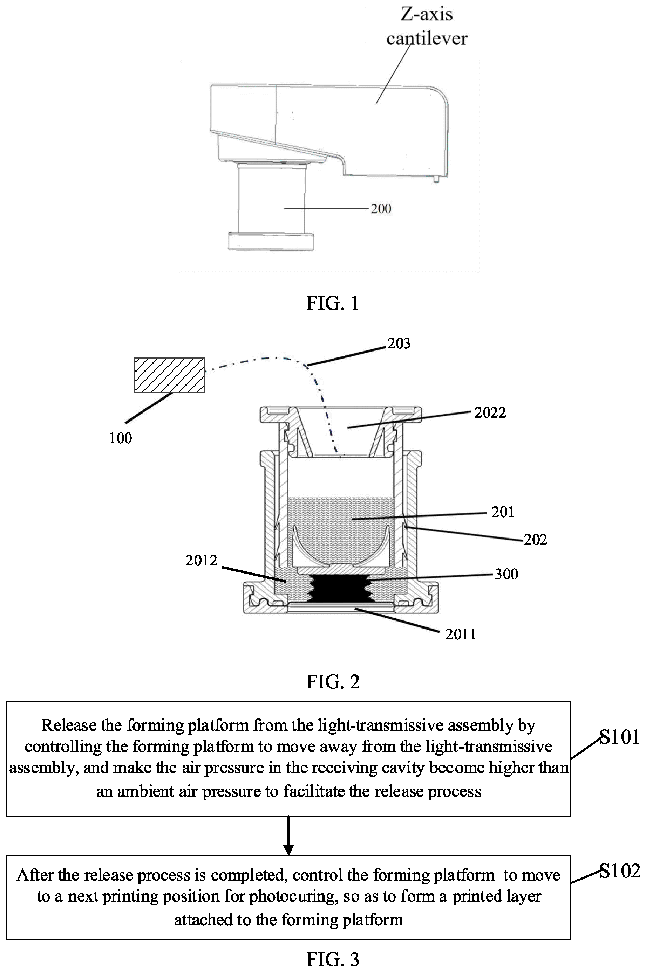

The present application provides a printing method applied to a forming module. The forming module is shown in FIG. 1 and FIG. 2. FIG. 1 is a schematic diagram of a forming module before printing provided by the present application. FIG. 2 is a cross-sectional view of the forming module of FIG. 1 after printing. As shown in FIG. 1 and FIG. 2, a forming module 200 defines a receiving cavity 201. The receiving cavity 201 is used for receiving printing material. The forming module 200 includes a light-transmissive assembly 2011 arranged on one side of the receiving cavity 201 and a forming platform 202 arranged opposite to the light-transmissive assembly 2011. The receiving cavity 201 includes a forming cavity 2012 located between the forming platform 202 and the light-transmissive assembly 2011. The forming platform 202 is capable of moving toward or away from the light-transmissive assembly 2011. The forming platform 202 includes a pressure-bearing surface, which is a cavity wall of the receiving cavity 201. And the pressure-bearing surface intersects with, preferably is perpendicular to, a direction of movement of the forming platform 202.

During printing, after photocuring of a current printed layer is completed, the forming platform 202 moves away from the light-transmissive assembly 2011 (i.e., piston movement) to perform the release process, and the printing material in the receiving cavity 201 flows into a space between a bottom of the forming platform 202 and the light-transmissive assembly 2011. After the release process is completed, the forming platform 202 is controlled to move toward the light-transmissive assembly 2011 to a next printing position, and then a light engine module is controlled to project light onto the light-transmissive assembly 2011. The light passes through the light-transmissive assembly 2011 to expose the printing material, and the printing material in the forming cavity 2012 is photocured to form a printed layer, which is attached to the forming platform 202. This process is repeated to achieve layer-by-layer printing, forming a printed object 300.

After exposure of the current printed layer ends, i.e., after the printing material is photocured to form the current printed layer, the forming platform 202 moves away from the light-transmissive assembly 2011, i.e., moves upward along a Z-axis, and the forming platform 202 then drives the formed printed layer to separate from the light-transmissive assembly 2011. This is the release process in 3D printing.

In some embodiments, the forming platform 202 may be integrated into the forming module 200, or the forming module 200 may be assembled using the forming platform 202, including being ready for use upon assembly. The receiving cavity 201 may be integrally provided in the forming module 200, or may be a cavity formed after the forming platform 202 is assembled to the forming module 200, which is not limited in this application.

FIG. 3 is a first schematic flowchart of a printing method provided by the present application. As shown in FIG. 3, the method includes:

S101, releasing the forming platform from the light-transmissive assembly by controlling the forming platform to move away from the light-transmissive assembly, and making the air pressure in the receiving cavity become higher than an ambient air pressure to facilitate the release process.

S102, after the release process is completed, the forming platform is controlled to move to a next printing position for photocuring, so as to form a printed layer attached to the forming platform.

The forming platform 202 is controlled to move away from the light-transmissive assembly 2011 and the air pressure in the receiving cavity 201 is increased for release. As shown in FIG. 2, the forming platform 202 moves away from the light-transmissive assembly 2011, and the air pressure in the receiving cavity 201 is increased, for example, so that the air pressure in the receiving cavity 201 is higher than the ambient air pressure.

In a condition that the air pressure in the receiving cavity 201 is increased, the internal air pressure in the receiving cavity 201 is higher than the ambient air pressure. The internal air pressure force experienced by the forming platform 202 and the light-transmissive assembly 2011 is greater than the ambient air pressure force experienced thereby, causing the light-transmissive assembly 2011 to have a tendency to move away from or actually move away from the forming platform 202, and therefore facilitating the release process. Furthermore, during the process of the forming platform 202 moving away from the light-transmissive assembly 2011, the higher air pressure enables the printing material to flow more quickly into the space between the forming platform 202 and the light-transmissive assembly 2011. This transforms the release process from a traditional mechanical hard-pulling method into a combined mechanical and pneumatic release method. During release, the forming platform 202 can carry the cured printed layer to be smoothly peeled off from the light-transmissive assembly 2011.

After the release process is completed, the forming platform 202 moves toward the light-transmissive assembly 2011 to the next printing position. The light engine module of the 3D printer projects light onto the light-transmissive assembly 2011. The printing material in the forming cavity 2012 is exposed and cured to form a next printed layer attached to the forming platform 202 (typically, the first printed layer is directly attached to the forming platform 202, while a non-first printed layer is indirectly attached to the forming platform 202 via a previous printed layer).

In some embodiments, after the release process is completed, the receiving cavity 201 is depressurized, so that the air pressure in the receiving cavity 201 is equal to the ambient air pressure. Of course, it may also be higher than the ambient air pressure. For example, during the process of the forming platform 202 moving toward the light-transmissive assembly 2011 and the photocuring process after release, the air pressure in the receiving cavity 201 may be equal to the ambient air pressure, or may be higher than the ambient air pressure. In practical operating conditions, after release is completed, the printing effect when the forming platform 202 moves toward the light-transmissive assembly 2011 and performs photocuring under the condition that the air pressure in the receiving cavity 201 is equal to the ambient air pressure is better than that when the air pressure in the receiving cavity 201 is higher than the ambient air pressure.

It should be understood that the ambient air pressure described in the embodiments of the present application refers to the air pressure outside the receiving cavity 201, which is typically atmospheric pressure.

Additionally, it should be noted that the printed layer being attached to the forming platform 202 includes direct attachment and indirect attachment. The first printed layer is directly attached to the forming platform 202, while a non-first printed layer is attached to a previous printed layer, i.e., indirectly attached to the forming platform 202.

The printing method provided by the present application is applied to a forming module. The forming module defines a receiving cavity for receiving the printing material. The forming module includes a light-transmissive assembly arranged on one side of the receiving cavity and a forming platform arranged opposite to the light-transmissive assembly. The receiving cavity includes a forming cavity located between the forming platform and the light-transmissive assembly. The forming platform is capable of moving toward or away from the light-transmissive assembly.

The method includes: the forming platform is controlled to move away from the light engine module, and the air pressure in the receiving cavity is caused to be higher than the ambient air pressure to achieve release. After release is completed, the forming platform is controlled to move toward the light-transmissive assembly to a next printing position, and the light engine module is controlled to project light, so that the printing material is photocured to form a printed layer attached to the forming platform. By controlling the movement of the forming platform and utilizing the pressure increase in the receiving cavity to assist release, the release force is effectively reduced, thereby minimizing damage to the printed layer, improving printing success rate and accuracy, and contributing to enhanced printing efficiency and process stability.

In some embodiments, the forming platform is controlled to move away from the light-transmissive assembly by a preset distance and the air pressure in the receiving cavity is increased to a first preset air pressure to achieve release. After the release is completed, the forming platform is controlled to move toward the light-transmissive assembly to a next printing position and depressurize the receiving cavity to the ambient air pressure for photocuring.

In some embodiments, the method further includes: the forming platform is controlled to move away from the light-transmissive assembly and the air pressure in the receiving cavity is caused to be higher than the ambient air pressure. The forming platform is controlled to move toward the light-transmissive assembly to the next printing position. By controlling the movement of the forming platform, the air pressure in the receiving cavity increases, forming the pressure difference between the internal of the receiving cavity and the external of the receiving cavity, generating a driving force on the forming platform to move away from the light-transmissive assembly, driving the forming platform to move away from the light-transmissive assembly for stirring, so that the printing material is uniform. The increased air pressure in the receiving cavity causes the printing material to flow faster, resulting in higher stirring efficiency.

In some embodiments, the forming platform is controlled to move away from the light-transmissive assembly to a first target position and the air pressure in the receiving cavity increased to a second preset air pressure. The forming platform is controlled to move toward the light-transmissive assembly to a second target position and the receiving cavity is depressurized to the ambient air pressure.

In some embodiments, the forming platform 202 is controlled to move away from the light-transmissive assembly 2011 by means of pneumatic driving and/or mechanical driving.

Where, the forming platform 202 is controlled to move away from the light-transmissive assembly 2011 by means of pneumatic driving may include:

The receiving cavity 201 is a receiving cavity. The air pressure in the receiving cavity 201 is controlled to increase, for example, by inflating the receiving cavity 201 so that the air pressure in the receiving cavity 201 increases and forms a driving force for moving the forming platform 202 away from the light-transmissive assembly 2011. Under the action of the driving force, the forming platform 202 may be driven to move away from the light-transmissive assembly 2011. The target position for the movement of the forming platform 202 is determined by a cantilever of the 3D printer. The forming module 200 is installed in the 3D printer, and the forming platform 202 is located between the cantilever and the light-transmissive assembly 2011. The cantilever is in transmission connection with a motor, driven by the motor to move, and achieves precise movement position control. The cantilever moves a preset distance or stops moving when reaching a preset position. The forming platform 202 moves the preset distance or stops when limited by the cantilever upon reaching the preset position, thus achieving precise movement. Where inflating the receiving cavity 201 may cause the air pressure in the receiving cavity 201 to be higher than the ambient air pressure.

The forming platform 202 is controlled to move toward the light-transmissive assembly 2011 includes: the cantilever is controlled to move toward the light-transmissive assembly 2011, the forming platform 202 is pushed to move toward the light-transmissive assembly 2011, and the receiving cavity 201 is depressurized, to make the air pressure in the receiving cavity 201 equal to the ambient air pressure. Resistance to the forming platform 202 moving toward the light-transmissive assembly 2011 is reduced, and sustained high pressure in the receiving cavity 201 is also avoided.

It should be noted that the movement of the forming platform 202 is controlled by pneumatic driving, i.e., by inflating the receiving cavity 201, the forming platform 202 may be controlled to move away from the light-transmissive assembly 2011 and the air pressure in the receiving cavity 201 may be caused to be higher than the ambient air pressure. Of course, the inflation must be such that the pneumatic driving force on the forming platform 202 is not less than the minimum force required to move the forming platform 202.

In some embodiments, the air pressure in the receiving cavity 201 may be increased by inflating the receiving cavity 201 using an air pump 100 as shown in FIG. 2.

In some embodiments, the forming platform is controlled to move away from the light-transmissive assembly by mechanical driving may include:

The forming platform is fixedly connected to the cantilever of the 3D printer, and the movement of the forming platform is driven by the movement of the cantilever. For example, when the cantilever is moved away from the light-transmissive assembly, the forming platform is driven to move away from the light-transmissive assembly. When the cantilever is moved toward the light-transmissive assembly, the forming platform is driven to move toward the light-transmissive assembly.

Specifically, a drive motor is rotated, and the cantilever is driven by a transmission assembly to move away from the light-transmissive assembly, thereby the forming platform is driven to move away from the light-transmissive assembly. When the cantilever is moved to a target position or over a target distance and then stops moving, the forming platform also stops moving accordingly, thereby completing precise movement of the preset distance or to the preset position. The drive motor is reversed, the cantilever is driven by the transmission assembly to move toward the light-transmissive assembly, and the forming platform is driven by the cantilever to move toward the light-transmissive assembly. When the cantilever is moved to the target position or moved the target distance and is stopped, the forming platform is stopped accordingly, and precise movement of the preset distance or to the preset position is completed. In this way, the forming platform may be precisely moved away from the light-transmissive assembly by a preset distance for release, and may be precisely moved toward the light-transmissive assembly to a next printing position for curing. The forming platform may be precisely moved away from the light-transmissive assembly to a first target position, and may be precisely moved toward the light-transmissive assembly to a second target position, and may be reciprocated for stirring.

In some embodiments, the forming platform may also be controlled to move away from the light-transmissive assembly by a combination of the above-mentioned pneumatic driving and mechanical driving. For example, the forming platform is controlled to move away from the light-transmissive assembly 2011 under the combined action of pneumatic driving and mechanical driving. In this embodiment, the sum of the pneumatic driving force and the mechanical driving force acting on the forming platform is not less than the minimum force required to move the forming platform. The forming platform is driven to move toward the light-transmissive assembly by the cantilever.

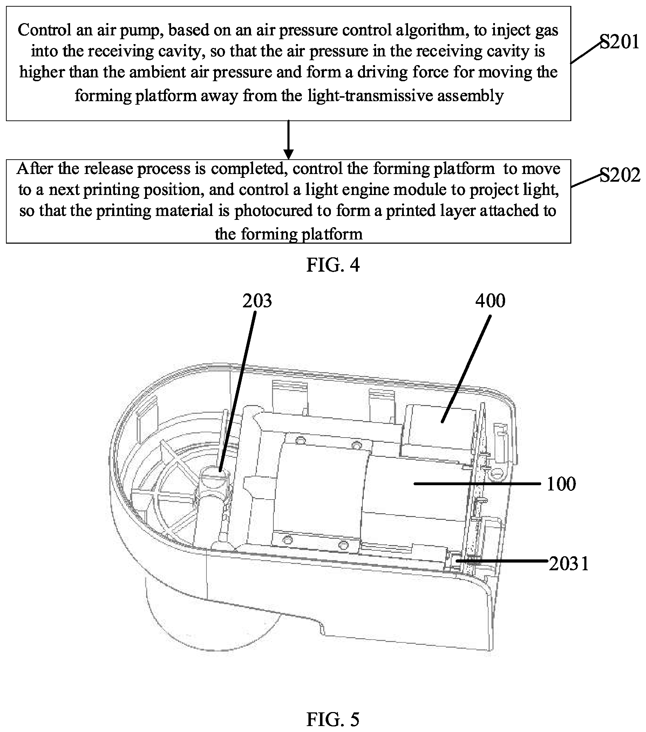

FIG. 4 is a second schematic flowchart of a printing method provided by the present application. As shown in FIG. 4, the method includes:

S201, an air pump is controlled, based on an air pressure control algorithm, to inject gas into the receiving cavity, so that the air pressure in the receiving cavity is higher than the ambient air pressure and a driving force for moving the forming platform away from the light-transmissive assembly is formed.

Referring to FIG. 2, the 3D printer includes an air pump 100. After photocuring of the current printed layer is completed, before or simultaneously with controlling the forming platform 202 to move away from the light-transmissive assembly 2011, the air pump 100 is controlled based on an air pressure control algorithm to inject gas into the receiving cavity 201, so that the air pressure in the receiving cavity 201 increases to be higher than the ambient air pressure and forms a driving force for moving the forming platform 202 away from the light-transmissive assembly 2011. Under the action of the driving force, the forming platform 202 is driven to move away from the light-transmissive assembly 2011. The forming platform 202 stops moving when reaching the target distance, limited by the cantilever of the 3D printer, thereby completing release.

Where the forming platform 202 is also provided with a vent port 2022 communicating with the receiving cavity 201, through which gas may be injected into the receiving cavity 201.

In some embodiments, the air pressure control algorithm may achieve precise control of the gas injection process, solving the problems of large pressure fluctuations and low control precision in the prior art, ensuring air pressure stability. Further, when the forming platform 202 moves away from the light-transmissive assembly 2011, the gap between the current printed layer of the formed printed object and the light-transmissive assembly 2011 becomes larger, and the printing material flows to fill this gap, where the bottom of the forming platform 202 is the current printed layer of the formed printed object. Since conventional printing materials are relatively viscous and have poor fluidity, relying on natural flow would require a certain amount of time to prepare for the next exposure. When gas is injected into the receiving cavity 201, the printing material accelerates its flow under the influence of air pressure, which may quickly fill the corresponding gap, shortening the time between printed layers and improving printing efficiency.

In addition, the printing material quickly fills the gap between the bottom of the forming platform 202 and the light-transmissive film 2011 under air pressure to provide printing material for the next printed layer, which may also replace the traditional communicating vessel structure, achieving printer device miniaturization through a single receiving cavity 201.

S202, After the release process is completed, the forming platform is controlled to move to a next printing position, and a light engine module is controlled to project light, so that the printing material is photocured to form a printed layer attached to the forming platform.

After release is completed, the forming platform 202 moves toward the light-transmissive assembly 2011 to the next printing position. The light engine module projects light onto the light-transmissive assembly 2011. The light passes through the light-transmissive assembly 2011 into the forming cavity 2012. Under the action of the light, the printing material that flowed into the space between the formed printed layer and the light-transmissive assembly 2011 in the forming cavity 2012 during the release process is photocured, forming a next printed layer attached to the forming platform 202.

In some embodiments, the movement of the forming platform 202 away from the light-transmissive assembly 2011 may be synchronized with the inflation of the receiving cavity 201, or may occur after the air pressure in the receiving cavity 201 is higher than the ambient air pressure, which is not limited in the present application. The movement of the forming platform 202 toward the light-transmissive assembly 2011 may be synchronized with the depressurization of the receiving cavity 201, or one may occur before the other, which is not limited in the present application, as long as the depressurization is completed during the photocuring process.

The printing method provided by the present application controls, based on an air pressure control algorithm, an air pump to inject gas into the receiving cavity, so that the air pressure in the receiving cavity increases to be higher than the ambient air pressure and forms a driving force for moving the forming platform away from the light-transmissive assembly. Where, based on the air pressure control algorithm, the air pump is controlled to inflate the receiving cavity, achieving precise control of the pressure inside the receiving cavity, ensuring air pressure stability, and overcoming pressure control defects. Furthermore, during the release process, the printing material in the receiving cavity may be quickly filled under pneumatic drive, shortening the time between printed layers and improving printing efficiency.

In some embodiments, gas is injected into the receiving cavity, causing the air pressure in the receiving cavity to be higher than the ambient air pressure. The light-transmissive assembly, such as a light-transmissive film, may experience a downward force and undergo elastic deformation, for example, slightly bulging downward. The formed printed layer, following the movement of the forming platform away from the light-transmissive assembly, experiences an upward driving force. Under the action of the upward driving force, combined with the elastic deformation of the light-transmissive film, a gap appears between the light-transmissive film and the current printed layer of the formed printed object due to the bulging of the light-transmissive film. This reduces the force required to separate the current printed layer from the light-transmissive film during the release process, i.e., the release force, making it easier for the current printed layer to detach from the light-transmissive film, effectively reducing the release force.

In some embodiments, when gas is injected into the receiving cavity, the injected gas exerts a positive pressure on the liquid surface of the printing material, i.e., the liquid surface of the printing material in the receiving cavity is subjected to a positive pressure. This pressure forces the printing material to actively and quickly penetrate the interface between the current printed layer being separated and the light-transmissive assembly. In other words, under the action of the positive pressure, the printing material actively and quickly penetrates between the current printed layer and the light-transmissive assembly, forming a fluid lubrication layer.

The existence of the fluid lubrication layer may effectively counteract part of the vacuum adsorption force and reduce the direct adhesion between the solid and the film, thereby reducing the force required to separate the current printed layer from the light-transmissive film. This makes the peeling process easier and smoother, achieving flexible release, greatly improving the stability and success rate of the printing process, and effectively eliminating the phenomenon of models falling off the platform. Further, the smooth release process may reduce impact and stress on the Z-axis motor, lead screw of the platform assembly, and the light-transmissive film, contributing to extending the service life of core components of the 3D printer.

Furthermore, the elastic deformation of the light-transmissive assembly (such as the light-transmissive film) and the appearance of the fluid lubrication layer may both effectively reduce the release force. A lower release force allows for finer supports for the formed printed object, no longer relying on bulky support structures to prevent detachment. This makes it possible to print extremely fine and lightweight support structures, which not only simplifies the post-processing workflow but also allows for a smoother surface finish of the printed product, which is beneficial for high-precision printing applications such as dental models.

Additionally, the reduced release force allows the Z-axis cantilever of the forming module to increase its speed within a certain range, potentially shortening the cycle time for printing each layer and improving overall printing efficiency.

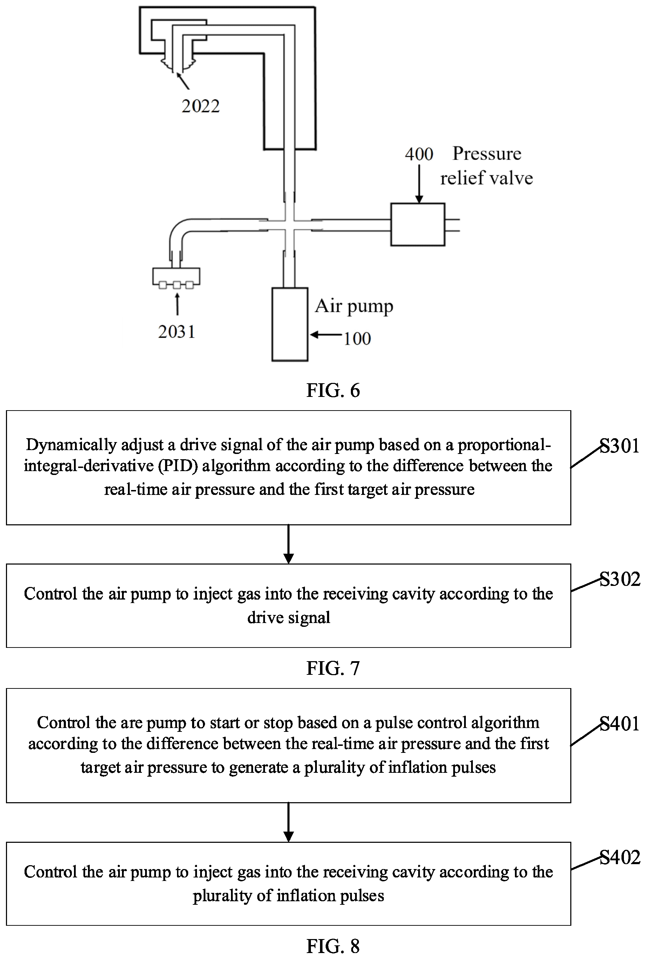

Further, FIG. 5 is a top view of the Z-axis cantilever in FIG. 1, and FIG. 6 is a schematic diagram of a gas path of a 3D printer provided by the present application. As shown in FIGS. 5 and 6, the 3D printer further includes a pressure relief valve 400 disposed on a gas line 203 between the air pump 100 and the receiving cavity 201. Further, the gas line 203 is also provided with an air pressure sensor 2031 for detecting a real-time air pressure within the receiving cavity 201. As described above, based on the air pressure control algorithm, the air pump 100 is controlled to inject gas into the receiving cavity 201, increasing the air pressure in the receiving cavity and forming a driving force for moving the forming platform 202 away from the light-transmissive assembly 2011 for release. After release is completed, the air pump 100 may be turned off, and the receiving cavity 201 is controlled to release gas via the pressure relief valve 400, so that the air pressure in the receiving cavity 201 decreases.

In some embodiments, the air pressure in the receiving cavity 201 is controlled to increase, for example, to a first target air pressure. After release is completed, the forming platform 202 is controlled to move toward the light-transmissive assembly 2011 to a next printing position, and the air pressure in the receiving cavity 201 is controlled to decrease, for example, to a second target air pressure, which is, for example, a curing air pressure. Then, the light engine module is controlled to project light, and the printing material is photocured to form a next printed layer attached to the forming platform 202. This process is repeated until the printing of the object is completed.

It should be noted that the receiving cavity 201 is typically maintained at a constant air pressure during the photocuring process. The curing air pressure is preferably equal to the ambient air pressure, although it may be other air pressure values, generally not less than the ambient air pressure. It should be noted that the constant air pressure being equal to the ambient air pressure indicates that the difference from the ambient air pressure is within an allowable error range.

In some embodiments, the forming platform 202 is controlled to move away from the light-transmissive assembly 2011 to a preset release height, at which point the release for the forming platform 202 is completed. Alternatively, the completion of release may be determined by monitoring the separation between the film and the current printed layer.

For example, for printing a printed layer with a layer thickness of 0.1 mm, the forming platform 202 is controlled to move away from the light-transmissive assembly 2011 and the receiving cavity 201 is inflated to increase its air pressure for release. The forming platform 202 rises by 1 mm to complete release. Then, the forming platform 202 is controlled to descend by 0.9 mm to reach the next printing position. The receiving cavity 201 is depressurized, for example, to a pressure equal to the ambient air pressure. The light engine module is controlled to project light, and the printing material is photocured to form a next printed layer attached to the forming platform 202. This process is repeated until the printing of the object is completed.

The light engine module projects light onto the light-transmissive assembly for a photocuring time corresponding to the layer thickness. After photocuring ends, due to the limitation on the upward movement displacement of the forming platform 202 by the Z-axis cantilever. For example, when the forming platform 202 moves upward by a displacement of 1mm, the preset position is reached. The air pump stops working, and the pressure relief valve 400 is opened, causing the air pressure in the receiving cavity 201 to decrease, for example, to the second target air pressure. The forming platform 202 moves downward by a displacement of 0.9mm to reach the predetermined position for the next printed layer, and the printing cycle for the next layer begins. When the pressure relief valve 400 is opened, the receiving cavity 201 releases gas, the elastic deformation of the light-transmissive assembly (such as the light-transmissive film) recovers to its initial state. The gap between the light-transmissive film and the current printed layer increases, and the printing material fills this gap. In some embodiments, the thickness of the gap is typically determined by the printing material, for example, it may be 0.05mm, 0.075mm, 0.1mm, etc.

It should be noted that the height to which the forming platform 202 needs to be raised away from the light-transmissive assembly 2011 for release must be greater than the height required to be raised to reach the next printing position. Therefore, the forming platform 202 may first move away from the light-transmissive assembly 2011 to complete release and then move toward the light-transmissive assembly 2011 to the next printing position. If the height to which the forming platform 202 needs to be raised away from the light-transmissive assembly 2011 for release is not greater than the height required to be raised to reach the next printing position, then during the printing process, the forming platform 202 only needs to move away from the light-transmissive assembly 2011.

In some embodiments, the second target air pressure may be the ambient air pressure or the curing air pressure.

In some embodiments, when the entire printed object is completed, the receiving cavity 201 is controlled to release air pressure via the pressure relief valve 400, so that the real-time air pressure in the receiving cavity 201 is equal to atmospheric pressure. In some embodiments, the process of controlling the receiving cavity 201 to release air pressure via the pressure relief valve 400 and the process of the forming platform 202 moving toward the light-transmissive assembly 2011 may be synchronized or may not be synchronized, which is not limited in the present application.

It should be noted that the air pressure sensor 2031 is used to detect the real-time air pressure within the receiving cavity 201. For example, it is used to detect the first target air pressure when gas is injected into the receiving cavity 201 to increase the air pressure, and to detect the second target air pressure when the pressure relief valve 400 is opened to decrease the air pressure in the receiving cavity 201.

In some embodiments, the first target air pressure may be higher than the ambient air pressure, but less than or equal to a maximum inflation air pressure of the air pump. The first target air pressure may be a fixed value or may be dynamically determined based on printing parameters. Its specific air pressure value may be determined based on actual conditions in practical applications, which is not limited to the present application.

In some embodiments, the second target air pressure may be equal to the ambient air pressure, i.e., when the air pressure sensor detects that the air pressure is zero, the forming platform moves downward by a corresponding displacement to reach the predetermined position for the next printed layer.

It should be noted that after the release is performed by increasing the air pressure in the receiving cavity 201 through mechanical driving or a combination of mechanical driving and pneumatic driving. The receiving cavity 201 is controlled to release gas via the pressure relief valve 400 to decrease the air pressure, for example, to the ambient air pressure or the curing air pressure, which is not limited in this application.

The printing method provided by the present application, based on the principles of gas dynamics, constructs a dynamic air pressure regulation system for the 3D printer through the coordinated control of the air pump, the air pressure sensor, and the pressure relief valve, achieving real-time monitoring and precise control of the air pressure in the receiving cavity during the printing process.

In some embodiments, while achieving the above-mentioned functions, the air pressure sensor and the pressure relief valve may also serve as a safety feature. For example, if the air pressure sensor detects that the real-time air pressure in the receiving cavity exceeds a preset air pressure threshold, it may indicate an abnormal situation causing excessive internal pressure in the printer. In this case, the pressure relief valve may be opened to control the receiving cavity to release gas, so that the air pressure in the receiving cavity decreases, preventing the accumulation of abnormal pressure and ensuring safety.

As described above, the printing method provided by the present application controls, based on an air pressure control algorithm, the air pump to inject gas into the receiving cavity, achieving precise control of the pressure inside the receiving cavity during the gas injection process. For example, the real-time air pressure of the receiving cavity is obtained via the air pressure sensor, and then based on the air pressure control algorithm, the air pump is controlled to inject gas into the receiving cavity according to the difference between the real-time air pressure and the first target air pressure.

In some embodiments, the air pump is controlled, based on the air pressure control algorithm and according to the difference between the real-time air pressure and the first target air pressure, to inject gas into the receiving cavity, which may be implemented as shown in FIG. 7.

S301, a drive signal of the air pump is dynamically adjusted based on a proportional -integral-derivative (PID) algorithm according to the difference between the real-time air pressure and the first target air pressure.

S302, the air pump is controlled to inject gas into the receiving cavity according to the drive signal.

For example, the air pressure control algorithm includes a proportional-integral-derivative (PID) algorithm, as shown in equation (1) below:

$$u(t) = Kp * e(t) + Ki * \int e(t)dt + Kd * de(t)/dt \qquad (1).$$

where u(t) represents the drive signal, such as a rotational speed or an output power of the air pump, e(t) represents the difference between the real-time air pressure and the first target air pressure, i.e., the air pressure deviation. Kp is a proportional coefficient, Ki is an integral coefficient, and Kd is a derivative coefficient.

The real-time air pressure in the receiving cavity is obtained via the air pressure sensor, and then the difference between the real-time air pressure and the first target air pressure is determined. Based on the difference, the drive signal for controlling the air pump is determined using the PID algorithm. According to the drive signal, the rotational speed and/or output power of the air pump is controlled, achieving control over the air pump injecting gas into the receiving cavity until the air pressure in the receiving cavity reaches the first target air pressure. Air pressure closed-loop control is achieved through the PID algorithm.

It may be understood that when the air pressure in the receiving cavity reaches the first target air pressure and the pressure relief valve is in a closed state, the receiving cavity is in a sealed environment.

The printing method provided by the present application dynamically adjusts the drive signal of the air pump based on the PID algorithm according to the difference between the real-time air pressure and the first target air pressure in the receiving cavity, so as to control the air pump to inject gas into the receiving cavity, causing the air pressure in the receiving cavity to reach the first target air pressure. Air pressure closed-loop control is performed using the PID algorithm, achieving precise air pressure control during the process of the air pump injecting gas into the receiving cavity, overcoming the pressure control defects in the prior art, and improving the printing effect.

In some embodiments, the air pump is controlled, based on the air pressure control algorithm and according to the difference between the real-time air pressure and the first target air pressure, to inject gas into the receiving cavity, which may be implemented as shown in FIG. 8.

S401, start and stop of the air pump are controlled based on a pulse control algorithm according to the difference between the real-time air pressure and the first target air pressure to generate a plurality of inflation pulses.

S402, the air pump is controlled to inject gas into the receiving cavity according to the plurality of inflation pulses.

The actual air pressure in the receiving cavity, i.e., the real-time air pressure, is detected by the air pressure sensor. The difference between the real-time air pressure and the required first target air pressure is calculated. Based on the difference, the start and stop of the air pump are controlled using a pulse control algorithm to generate a series of inflation pulse signals, i.e., a plurality of inflation pulses, which drive the air pump to inject gas into the receiving cavity according to the plurality of inflation pulses. Each inflation pulse signal corresponds to one start-stop cycle of the air pump.

Where, the air pressure control algorithm includes a pulse control algorithm. Control parameters of the pulse control algorithm may be obtained based on printing parameters. The control parameters may include, for example, but are not limited to, at least one of a pulse air pressure value, an inflation duration of a single inflation pulse, and an inflation timing sequence.

In some embodiments, the printing parameters may include, but are not limited to, at least one of a material characteristic parameter of the printing material, a printing process parameter, and a printing environment parameter. The material characteristic parameter may include parameters such as type and viscosity of the printing material. The printing process parameter may include layer thickness, exposure time, the speed and distance of the platform assembly during release, etc. The printing environment parameter may include temperature, humidity, etc.

The printing method provided by the present application controls the air pump to inject gas into the receiving cavity in a pulsed manner based on a pulse control algorithm, avoiding pressure overshoot, achieving precise coordination between the release process of the platform assembly and the start-up pulses, and realizing efficient and dynamic assisted release of the platform assembly, so as to apply the correct magnitude of force and achieve precise and stable air pressure control when the platform assembly performs release. Furthermore, the control parameters of the pulse control algorithm may be determined by the printing parameters, and the control parameters may be adaptively adjusted according to the printing parameters, allowing the control of the gas injection process to dynamically match the release requirements, ensuring stable control of the release force in different scenarios, improving the compatibility of the 3D printer equipment, and being suitable for a variety of printing materials and complex printing tasks.

In some embodiments, before controlling the air pump to inject gas into the receiving cavity based on the air pressure control algorithm, the first target air pressure may be determined by scanning an identification unit on the forming module. The identification unit is provided on the forming module and is used to uniquely identify the printing material.

For example, the forming module may be encapsulated in a capsule-like form and used as a disposable item. When printing is required, the forming module is assembled into the 3D printer for printing and is discarded after printing is completed. Another forming module is assembled for the next print. The forming module may be provided with an identification unit, such as a QR code, to identify the printing material encapsulated in the forming module. Of course, the printing material, such as printing resin, may also be injected into the forming module before printing.

In some embodiments, the identification unit may also be a tag such as an NFC or RFID tag. It may be a readable tag or a readable and writable tag, so as to facilitate real-time update management of the usage status of the forming module. The information stored in the identification unit may include basic parameters of the printing material, such as material name, number, etc., and may also include one or more of stirring parameters, printing parameters, etc. Of course, stirring parameters and printing parameters may also be determined by matching the basic parameters of the printing material against a database.

By scanning the identification unit, information associated with the printing material may be obtained, such as the first target air pressure value, the printing parameters, etc.

For example, a preset fixed air pressure value in the information obtained by scanning the identification unit is directly determined as the first target air pressure to be achieved when injecting gas into the receiving cavity for printing using the current printing material.

Alternatively, printing parameters of the printing material are obtained by scanning the identification unit, and the first target air pressure is dynamically determined according to the printing parameters. The printing parameters include at least one of a material characteristic parameter of the printing material, a printing process parameter, and a printing environment parameter. For example, the optimal air pressure value is dynamically calculated as the first target air pressure by analyzing the viscosity of the printing material, layer thickness, and environmental conditions.

The printing method provided by the present application allows the first target air pressure to be either a fixed air pressure value or dynamically determined based on printing parameters. Setting the first target air pressure to a fixed value may ensure operational convenience and reliability. Dynamically determining the first target air pressure allows for precise adaptation of the optimal air pressure according to the material characteristics of the printing material, printing process, and environmental conditions, effectively coping with complex printing scenarios and improving printing results.

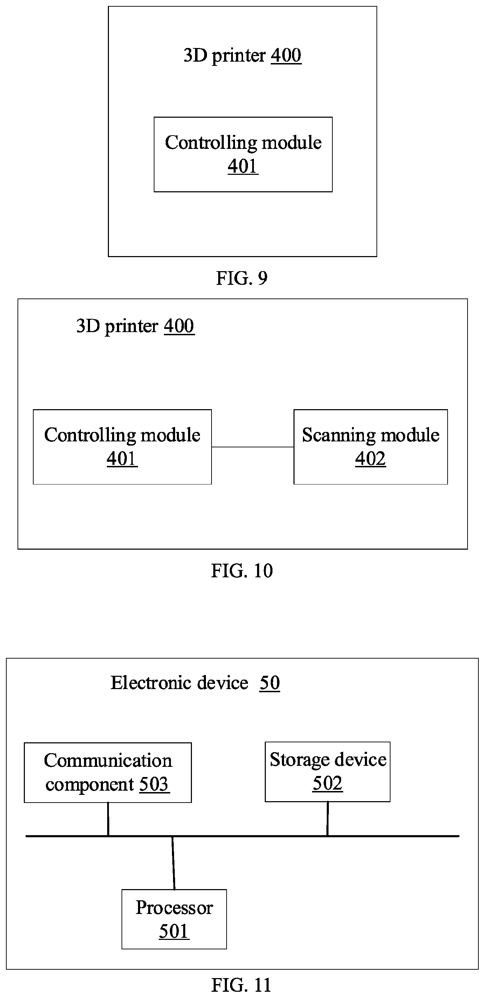

FIG. 9 is a first structural schematic diagram of a printing device provided by the present application. The printing device is applied to a 3D printing system. The 3D printing system includes a forming module. The forming module defines a receiving cavity. The forming module includes a light-transmissive assembly arranged on one side of the receiving cavity and a forming platform arranged opposite to the light-transmissive assembly. The receiving cavity is used for receiving the printing material, and includes the forming cavity located between the forming platform and the light-transmissive assembly. The forming platform is capable of moving toward or away from the light-transmissive assembly. As shown in FIG. 9, the printing device 40 provided by the present application includes:

a controlling module 401 configured to control the forming platform to move away from the light-transmissive assembly and cause an air pressure in the receiving cavity to be higher than an ambient air pressure.

In a possible design, the controlling module 401 is further configured to:

perform release by controlling the forming platform to move away from the light-transmissive assembly and causing the air pressure in the receiving cavity to be higher than the ambient air pressure;

after release is completed, control the forming platform to move to a next printing position for photocuring, so as to form a printed layer attached to the forming platform.

In a possible design, the controlling module 401 is further configured to:

after release is completed, cause the air pressure in the receiving cavity to be equal to the ambient air pressure.

In a possible design, the controlling module 401 is further configured to:

control the forming platform to move away from the light-transmissive assembly by means of pneumatic driving and/or mechanical driving.

In a possible design, the controlling module 401 is further configured to:

control the air pressure in the receiving cavity to increase, so that the air pressure in the receiving cavity is higher than the ambient air pressure and forms a driving force for moving the forming platform away from the light-transmissive assembly.

In a possible design, the controlling module 401 is further configured to:

control an air pump to inject gas into the receiving cavity based on an air pressure control algorithm, so that the air pressure in the receiving cavity increases.

In a possible design, the controlling module 401 is further configured to:

control the receiving cavity to release gas via a pressure relief valve, so that the air pressure in the receiving cavity decreases.

In a possible design, the controlling module 401 is further specifically configured to:

detect, by an air pressure sensor, a real-time air pressure in the receiving cavity;

control, based on the air pressure control algorithm, the air pump to inject gas into the receiving cavity according to a difference between the real-time air pressure and a first target air pressure.

In a possible design, the controlling module 401 is further configured to:

dynamically adjust a drive signal of the air pump based on a proportional-integral-derivative algorithm according to the difference between the real-time air pressure and the first target air pressure;

control the air pump to inject gas into the receiving cavity according to the drive signal, wherein the drive signal is used to control a rotational speed and/or an output power of the air pump.

In a possible design, the controlling module 401 is further configured to:

control start and stop of the air pump based on a pulse control algorithm according to the difference between the real-time air pressure and the first target air pressure to generate a plurality of inflation pulses;

control the air pump to inject gas into the receiving cavity according to the plurality of inflation pulses.

Based on FIG. 9, FIG. 10 is a second structural schematic diagram of a printing device provided by the present application. As shown in FIG. 10, the printing device 400 further includes: a scanning module 402. The scanning module 402 is configured to:

scan an identification unit provided on the forming module to obtain the first target air pressure, where the identification unit is used to uniquely identify the printing material.

In a possible design, the scanning module 402 is further configured to:

determine a preset fixed air pressure value in information obtained by scanning the identification unit as the first target air pressure; or

obtain a printing parameter by scanning the identification unit, and determine the first target air pressure according to the printing parameter, where the printing parameter includes at least one of a material characteristic parameter of the printing material, a printing process parameter, and a printing environment parameter.

In a possible design, the controlling module 401 is further configured to:

generate a control parameter of the pulse control algorithm in the air pressure control algorithm according to the printing parameter, where the control parameter includes at least one of a pulse air pressure value, an inflation duration of a single inflation pulse, and an inflation timing sequence.

In a possible design, the first target air pressure is higher than the ambient air pressure and is less than or equal to a maximum inflation air pressure of the air pump, and the second target air pressure is equal to atmospheric pressure.

In a possible design, the controlling module 401 is further configured to:

if the real-time air pressure exceeds a preset air pressure threshold, control the receiving cavity to release gas via the pressure relief valve, so that the air pressure in the receiving cavity decreases.

The printing device provided by the present application may perform the methods provided by the above method embodiments, with implementation principles and technical effects similar to those described, which will not be repeated here in this embodiment.

FIG. 11 is a structural schematic diagram of a 3D printer provided by the present application. As shown in FIG. 11, a 3D printer, as electronic device 50 provided by the present application, includes: at least one processor 501 and a storage device 502. In some embodiments, the device 50 further includes a communication component 503. Where the processor 501, the storage device 502, and the communication component 503 are connected via a bus.

In a specific implementation process, the at least one processor 501 executes computer-executable instructions stored in the storage device 502, so that the at least one processor 501 performs the above-mentioned method.

The specific implementation process of the processor 501 may be referred to the above method embodiments, with implementation principles and technical effects similar to those described, which will not be repeated here in this embodiment.

In the above embodiments, it should be understood that the processor may be a central processing unit (CPU), or other general-purpose processors, digital signal processors (DSPs), application-specific integrated circuits (ASICs), etc. A general-purpose processor may be a microprocessor, or the processor may be any conventional processor, etc. The steps of the method disclosed in the invention may be directly implemented as being executed by a hardware processor, or executed by a combination of hardware and software modules in the processor.

The storage device may include high-speed random access memory (RAM), and may also include non-volatile memory (NVM), such as at least one disk storage device.

The bus may be an industry standard architecture (ISA) bus, a peripheral component interconnect (PCI) bus, or an extended industry standard architecture (EISA) bus, etc. The bus may be classified into an address bus, a data bus, a control bus, etc. For ease of representation, the bus in the drawings of the present application is not limited to only one bus or one type of bus.

The present application also provides a computer program product, comprising a computer program, which when executed by a processor implements the above-mentioned method.

The present application also provides a computer-readable storage medium, wherein the computer-readable storage medium stores computer-executable instructions, which when executed by a processor implement the above-mentioned method.

The above-mentioned readable storage medium may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk. The readable storage medium may be any available medium that may be accessed by a general-purpose or special-purpose computer.

An exemplary readable storage medium is coupled to the processor, so that the processor can read information from the readable storage medium and can write information to the readable storage medium. Of course, the readable storage medium may also be an integral part of the processor. The processor and the readable storage medium may be located in an application-specific integrated circuit (ASIC). Of course, the processor and the readable storage medium may also exist as discrete components in the device.

The division of units is merely a logical function division, and there may be other division manners in actual implementation. For example, multiple units or components may be combined or integrated into another system, or some features may be ignored or not performed. Another point is that the mutual coupling or direct coupling or communication connections shown or discussed may be indirect couplings or communication connections through some interfaces, devices, or units, and may be electrical, mechanical, or other forms.

Units described as separate components may or may not be physically separate. Components shown as units may or may not be physical units, i.e., they may be located in one place or distributed over multiple network units. Some or all of the units may be selected according to actual needs to achieve the purpose of the solution of this embodiment.

In addition, various functional units in various embodiments of the present invention may be integrated into one processing unit, or each unit may exist physically separately, or two or more units may be integrated into one unit.

If the functions are implemented in the form of software functional units and sold or used as independent products, they may be stored in a computer-readable storage medium. Based on this understanding, the essential part of the technical solution of the present invention, or the part contributing to the prior art, or part of the technical solution, may be embodied in the form of a software product. The computer software product is stored in a storage medium and includes several instructions for causing a computer device (which may be a personal computer, server, or network device, etc.) to perform all or part of the steps of the methods described in various embodiments of the present invention. The aforementioned storage medium includes: various media that can store program code, such as a USB flash drive, a mobile hard disk, a read-only memory (ROM), a random access memory (RAM), a magnetic disk, or an optical disk.

Those skilled in the art can understand that all or part of the steps of the above method embodiments may be implemented by program instructions related to hardware. The aforementioned program may be stored in a computer-readable storage medium. When executed, the program performs the steps of the above method embodiments; and the aforementioned storage medium includes: various media that can store program code, such as ROM, RAM, magnetic disk, or optical disk.

Finally, it should be noted that: those skilled in the art will readily contemplate other embodiments of the present invention after considering the specification and practicing the invention disclosed herein. This application is intended to cover any variations, uses, or adaptations of the present invention, which follow the general principles of the present invention and include common knowledge or conventional technical means in the technical field not disclosed by the present invention. The description and examples are to be regarded as exemplary only, with the true scope and spirit of the present invention being indicated by the following claims. It is not intended to be limited to the precise structures described above and illustrated in the accompanying drawings, and various modifications and changes may be made without departing from the scope thereof. The scope of the present invention is limited only by the claims appended.

**Claims**

1. A printing method, applied in a forming module (200), wherein the forming module (200) defines a receiving cavity (201), and comprises a light-transmissive assembly (2011) arranged on one side of the receiving cavity (201) and a forming platform (202) arranged opposite to the light-transmissive assembly (2011), the receiving cavity (201) receives printing material and comprises a forming cavity (2012) located between the forming platform (202) and the light-transmissive assembly (2011), and the forming platform (202) is movable toward or away from the light-transmissive assembly(2011); the printing method, comprising:

   controlling an air pump (100) to inject gas into the receiving cavity (201) based on an air pressure control algorithm until an air pressure in the receiving cavity (201) is higher than an ambient air pressure;
   obtaining a pressure difference based on the air pressure in the receiving cavity (201) and the ambient air pressure;
   determining a driving force for moving the forming platform (202) away from the light-transmissive assembly (2011) based on the pressure difference; and
   controlling the forming platform (202) to move away from the light-transmissive assembly (2011) based on the driving force.

2. The printing method according to claim 1, further comprising:

   after the forming platform (202) is moved away from the light-transmissive assembly (2011), controlling the forming platform (202) to move to a next printing position for photocuring;
   forming a printed layer attached to the forming platform (202).

3. The printing method according to claim 2, wherein after the forming platform (202) is moved away from the light-transmissive assembly (2011), the printing method further comprises:
adjusting the air pressure in the receiving cavity (201) to be substantially equal to the ambient air pressure.

4. The printing method according to claim 1, wherein controlling the forming platform (202) to move away from the light-transmissive assembly (2011) based on the driving force further comprises:
controlling the forming platform (202) to move away from the light-transmissive assembly (2011) by means of pneumatic driving and/or mechanical driving.

5. The printing method according to claim 1, wherein after the forming platform (202) is moved away from the light-transmissive assembly (2011), the printing method further comprises:
decreasing the air pressure in the receiving cavity (201) by controlling the receiving cavity (201) to release gas via a pressure relief valve (400).

6. The printing method according to claim 1, further comprising:

   detecting, by an air pressure sensor (2031), a real-time air pressure in the receiving cavity (201);
   controlling, based on the air pressure control algorithm, the air pump (100) to inject gas into the receiving cavity (201) according to a difference between the real-time air pressure and a first target air pressure.

7. The printing method according to claim 6, wherein the controlling, based on the air pressure control algorithm, the air pump (100) to inject gas into the receiving cavity (201) according to the difference between the real-time air pressure and the first target air pressure, comprises:

   dynamically adjusting a drive signal of the air pump (100) based on a proportional-integral-derivative algorithm according to the difference between the real-time air pressure and the first target air pressure;
   controlling the air pump (100) to inject gas into the receiving cavity (201) according to the drive signal, wherein the drive signal controls a rotational speed and/or an output power of the air pump (100).

8. The printing method according to claim 6, wherein the controlling, based on the air pressure control algorithm, the air pump (100) to inject gas into the receiving cavity (201) according to the difference between the real-time air pressure and the first target air pressure, comprises:

   generating a plurality of inflation pulses by controlling the air pump (100) based on a pulse control algorithm according to the difference between the real-time air pressure and the first target air pressure;
   controlling the air pump (100) to inject gas into the receiving cavity (201) according to the plurality of inflation pulses.

9. The printing method according to claim 8, wherein before the controlling the air pump (100) to inject gas into the receiving cavity (201) based on the air pressure control algorithm, the method further comprises:
scanning an identification unit on the forming module (200) and obtaining the first target air pressure, wherein the identification unit uniquely identifies the printing material.

10. The printing method according to claim 9, wherein the scanning the identification unit on the forming module (200) to obtain the first target air pressure comprises:

    determining a preset fixed air pressure value in information obtained by scanning the identification unit as the first target air pressure; or
    obtaining a printing parameter by scanning the identification unit, and determining the first target air pressure according to the printing parameter, wherein the printing parameter comprises at least one of a material characteristic parameter of the printing material, a printing process parameter, and a printing environment parameter.

11. The printing method according to claim 10, the method further comprising:
generating a control parameter of the pulse control algorithm in the air pressure control algorithm according to the printing parameter, wherein the control parameter comprises at least one of a pulse air pressure value, an inflation duration of a single inflation pulse, and an inflation timing sequence.

12. The printing method according to claim 11, wherein the first target air pressure is higher than the ambient air pressure and is less than or equal to a maximum inflation air pressure of the air pump (100).

13. The printing method according to claim 6, the printing method further comprising:
in response to a determination that the real-time air pressure exceeds a preset air pressure threshold, controlling the receiving cavity (201) to release gas via a pressure relief valve (400) and decreasing the air pressure in the receiving cavity (201).

14. The printing method according to claim 1, wherein when gas is injected into the receiving cavity (201) to make the air pressure in the receiving cavity (201) higher than the ambient air pressure, the light-transmissive assembly (2011) undergoes elastic deformation.

15. A 3D printer, comprising:

a forming module (200), wherein the forming module (200) defines a receiving cavity (201), and comprises a light-transmissive assembly (2011) arranged on one side of the receiving cavity (201) and a forming platform (202) arranged opposite to the light-transmissive assembly (2011), the receiving cavity (201) receives printing material and comprises a forming cavity (2012) located between the forming platform (202) and the light-transmissive assembly (2011), and the forming platform(202) is movable toward or away from the light-transmissive assembly (2011);
a storage device; and
at least one processor;
wherein the storage device stores one or more programs that, when executed by the at least one processor, cause the at least one processor to implement the printing method according to any one of claims 1-14.

FIG. 1

FIG. 2

| |
|---|
| Release the forming platform from the light-transmissive assembly by controlling the forming platform to move away from the light-transmissive assembly, and make the air pressure in the receiving cavity become higher than an ambient air pressure to facilitate the release process |

S101

| |
|---|
| After the release process is completed, control the forming platform to move to a next printing position for photocuring, so as to form a printed layer attached to the forming platform |

S102

FIG. 3

Control an air pump, based on an air pressure control algorithm, to inject gas into the receiving cavity, so that the air pressure in the receiving cavity is higher than the ambient air pressure and form a driving force for moving the forming platform away from the light-transmissive assembly — S201

After the release process is completed, control the forming platform to move to a next printing position, and control a light engine module to project light, so that the printing material is photocured to form a printed layer attached to the forming platform — S202

FIG. 4

203  400

100

2031

FIG. 5

400  Pressure
relief valve

2022

Air pump

2031

100

FIG. 6

| |
|---|
| Dynamically adjust a drive signal of the air pump based on a proportional-integral-derivative (PID) algorithm according to the difference between the real-time air pressure and the first target air pressure |

S301

| |
|---|
| Control the air pump to inject gas into the receiving cavity according to the drive signal |

S302

FIG. 7

| |
|---|
| Control the are pump to start or stop based on a pulse control algorithm according to the difference between the real-time air pressure and the first target air pressure to generate a plurality of inflation pulses |

S401

| |
|---|
| Control the air pump to inject gas into the receiving cavity according to the plurality of inflation pulses |

S402

FIG. 8

3D printer 400

Controlling module
401

FIG. 9

3D printer 400

| Controlling module 401 | Scanning module 402 |

FIG. 10

Electronic device 50

Communication component 503

Storage device 502

Processor 501

FIG. 11